# EUROPEAN PATENT APPLICATION

(11) **EP 4 592 069 A1**
(43) Date of publication of application: **30.07.2025**
(21) Application number: 24218985.0
(22) Date of filing: 11.12.2024
(51) Int. Cl.: B29D 30/06, B60C 11/12

(54) **MOLD AND TIRE**

(30) Priority: 24.01.2024 JP 2024008914
(71) Applicant: SUMITOMO RUBBER INDUSTRIES, LTD., Kobe-shi, Hyogo 651-0072 (JP)
(72) Inventor: HOSODA, YASUHIRO, Hyogo, 651-0072 (JP)
(74) Representative: Forresters IP LLP

(57) **Abstract**

A mold for vulcanization molding a tire includes a tread ring. The tread ring includes a ground contacting surface molding portion, a first groove forming convex portion and a second groove forming convex portion raised from the ground contacting surface molding portion, and at least one blade having both ends connected with the first and second groove forming convex portions so as to form a sipe having both ends connected with two grooves. The at least one blade includes a main body portion having a thickness of 0.2 mm or less and a reinforcing portion having a thickness greater than 0.2 mm. The reinforcing portion includes a first reinforcing portion formed locally on a radially inner end edge side of the blade and a first connection portion side. The first connection portion is a connection between the blade and the first groove forming convex portion.

## Description

### RELATED APPLICATIONS

This application claims the benefit of foreign priority to Japanese Patent Applications No. JP2024-008914, filed January 24, 2024, which is incorporated by reference in its entirety.

### FIELD OF THE INVENTION

The present invention relates to a mold for vulcanization molding a tire and a tire vulcanization-molded by using said mold.

### BACKGROUND OF THE INVENITON

Molds including blades for forming sipes in a tread portion are conventionally known (see Unexamined Japanese Patent Application Document JPH03-189112A, for example).

### SUMMARY OF THE INVENTION

The above-mentioned Unexamined Japanese Patent Application Document JPH03-189112A proposes a blade with a thicker free end. However, since the free end is formed thicker over the entire longitudinal direction of the blade, the rigidity of the tread portion decreases, anti-wear performance deteriorates, and rolling resistance increases.

The present invention was made in view of the above, and a primary object thereof is to provide a tire having good anti-wear performance and low rolling resistance and to provide a mold for vulcanization molding the above-mentioned tire.

The present invention is a mold for vulcanization molding a tire including a tread ring for forming a tread portion, wherein
the tread ring includes:
a ground contacting surface molding portion for forming a ground contacting surface of the tread portion;
a first groove forming convex portion and a second groove forming convex portion protruding from the ground contacting surface molding portion so as to form two grooves adjacent to each other in the tread portion; and
one or more blades each having one end connected with the first groove forming convex portion and the other end connected with the second groove forming convex portion so as to form a sipe communicating with the two grooves in the tread portion,
wherein the blade or each blade includes a main body portion having a thickness of 0.2 mm or less, a reinforcing portion having a thickness greater than 0.2 mm, a radially inner end edge, and a first connection portion between the blade or each blade and the first groove forming convex portion, and
the reinforcing portion includes a first reinforcing portion formed locally on the radially inner end edge side and the first connection portion side.

Since the mold of the present invention has the above-described configuration, it is possible that the mold of the present invention provides a tire having good anti-wear performance and small rolling resistance.

### BRIEF DESCRIPTION OF THE DRAWINGS

FIG. 1 is a perspective view showing an embodiment of a mold according to the present invention, with a part cut away.
FIG. 2 is a cross-sectional view of a first modification of the mold shown in FIG. 1.
FIG. 3 is a perspective view showing a second modification of the mold shown in FIG. 1.
FIG. 4 is a perspective view showing a third modification of the mold shown in FIG. 1.
FIG. 5 is a perspective view showing a fourth modification of the mold shown in FIG. 1.
FIG. 6 is a cross-sectional view of the mold shown in FIG. 5.
FIG. 7 is a development view of a fifth modification of the mold shown in FIG. 1.
FIG. 8 is a perspective view of a tire vulcanization-molded by using the mold shown in FIG. 1.

### DETAILED DESCRIPTION OF THE INVENTION

An embodiment of the present invention will now be described in conjunction with accompanying drawings.

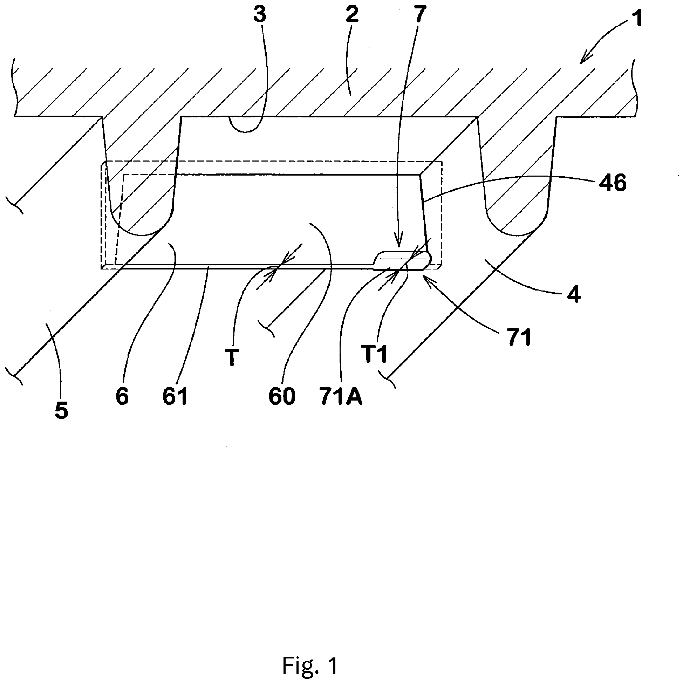

FIG. 1 is a cross-sectional view showing the configuration of a mold 1 according to the present embodiment.

The mold 1 includes a tread ring 2 for forming the tread portion. The tread ring 2 may be divided in the mold circumferential direction, or in the mold axial direction. It should be noted that the mold circumferential direction is a direction corresponding to the tire circumferential direction in the mold. The same applies to the mold axial direction and the mold radial direction.

The tread ring 2 includes a ground contacting surface molding portion 3 for molding the ground contacting surface of the tread portion, a first groove forming convex portion 4 and a second groove forming convex portion 5 for forming two grooves adjacent to each other in the tread portion, and blades 6 for forming sipes in the tread portion. It should be noted that only one of the blades 6 is shown in FIG. 1.

The first groove forming convex portion 4 and the second groove forming convex portion 5 are formed so as to protrude inward in the mold radial direction from the ground contacting surface molding portion 3. The first groove forming convex portion 4 and the second groove forming convex portion 5 are arranged adjacent to each other and facing each other.

It is preferred that the protruding height (corresponding to the groove depth) of the first groove forming convex portion 4 and the second groove forming convex portion 5 from the ground contacting surface molding portion 3 is 12 mm or more. The mold 1 configured as such is suitable for vulcanization molding of heavy-duty tires.

The first groove forming convex portion 4 and the second groove forming convex portion 5 in the present embodiment extend in the mold circumferential direction. The first groove forming convex portion 4 and the second groove forming convex portion 5 configured as such form circumferential grooves extending in the tire circumferential direction. The first groove forming convex portion 4 and the second groove forming convex portion 5 may extend in the mold axial direction.

The tread ring 2 may have other groove forming convex portions in addition to the first groove forming convex portion 4 and the second groove forming convex portion 5.

Both ends of each of the blades 6 are connected to the first groove forming convex portion 4 and the second groove forming convex portion 5. In other words, each of the blades 6 has one end connected to the first groove forming convex portion 4 and the other end connected to the second groove forming convex portion 5. The first groove forming convex portion 4, the second groove forming convex portion 5, and the blades 6 form two grooves and the sipes each connecting the two grooves in the tread portion.

At least one blade 6 may be provided between the first groove forming convex portion 4 and the second groove forming convex portion 5. In a configuration in which the first groove forming convex portion 4 and the second groove forming convex portion 5 extend in the mold circumferential direction, it is preferred that multiple blades 6 are arranged at appropriate intervals in the mold circumferential direction. Hereinafter, unless otherwise noted, the following description will be given with respect to one blade 6, but it is preferred that each described feature is applicable to multiple blades 6.

The blade 6 in the present embodiment has an outer end in the mold radial direction embedded in the ground contacting surface molding portion 3. Further, each end in the mold axial direction of the blade 6 are embedded in the first groove forming convex portion 4 and the second groove forming convex portion 5, respectively. Such a configuration increases the rigidity of the blade 6.

The protruding height of the blade 6 from the ground contacting surface molding portion 3 is smaller than the protruding height of each of the first groove forming convex portion 4 and the second groove forming convex portion 5 from the ground contacting surface molding portion 3.

The blade 6 has a main body portion 60 having a thickness (T) of 0.2 mm or less, and a reinforcing portion 7 having a thickness (T1) greater than 0.2 mm.

The main body portion 60 accounts for the majority of the blade 6. Since the thickness (T) of the main body portion 60 is 0.2 mm or less, the width of each of the sipes is limited, the decrease in the rigidity of the tread portion is suppressed, the anti-wear performance is improved, and the rolling resistance is reduced.

The reinforcing portion 7 reinforces the main body portion 60. When the mold 1 is opened and the vulcanized tire is demolded from the mold 1, the blade 6 is subjected to large stress. If a large stress is applied to the blade 6 having the thickness of less than 0.2 mm, the blade 6 may be deformed. In the mold 1 of the present invention, the main body portion 60 is reinforced by the reinforcing portion 7 having the thickness (T1) of more than 0.2 mm, therefore, deformation of the blade 6 is suppressed. Thereby, the thickness (T) of the main body portion 60 can be set even thinner to further improve the anti-wear performance and further reduce the rolling resistance.

The reinforcing portion 7 has a first reinforcing portion 71. The first reinforcing portion 71 is disposed on the first groove forming convex portion 4 side.

The first reinforcing portion 71 is disposed on an end edge 61 side. The end edge 61 is an inner edge in the mold radial direction and is on the free end side of the blade 6. Therefore, the end edge 61 side, i.e., the tip side, of the blade 6 is effectively reinforced.

In particular, stress tends to concentrate at a first connection portion 46 which is the connection portion between the blade 6 and the first groove forming convex portion 4. In the mold 1 of the present invention, the first reinforcing portion 71 formed locally on the first connection portion 46 side relieves the stress concentration in the first connection portion 46, thereby, deformation of the blade 6 is suppressed.

The expression "formed locally" means that the first reinforcing portion 71 is not formed over the entire area from the first groove forming convex portion 4 to the second groove forming convex portion 5, but is formed partially on the first connection portion 46 side thereof. Since the first reinforcing portion 71 is formed locally, the decrease in the rigidity of the tread portion is limited, the anti-wear performance is improved, and the rolling resistance is reduced.

It should be noted that the shape of the blade 6 may be planar, or may be two-dimensional extending in a zigzag pattern in one direction, or may be three-dimensional extending in a zigzag pattern in two directions. By combining the two-dimensional or three-dimensional blade with the first reinforcing portion 71, the strength of the blade 6 is dramatically improved.

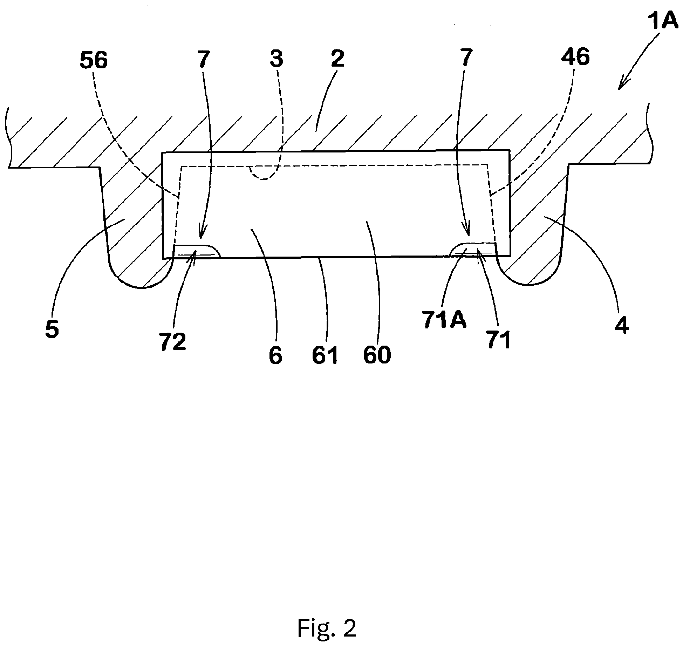

FIG. 2 shows a mold 1A according to the first modification including modification of the reinforcing portion 7 shown in FIG. 1. For the parts of the mold 1A in FIG. 2 that are not described below, the configuration of the mold 1 in FIG. 1 described above can be adopted.

As shown in FIG. 2, it is preferred that the reinforcing portion 7 further includes a second reinforcing portion 72 formed locally on a second connection portion 56 side thereof. The second connection portion 56 is the connection portion of the reinforcing portion 7 with the second groove forming convex portion 5. The first reinforcing portion 71 and the second reinforcing portion 72 reinforce both ends of the blade 6.

The features of the second reinforcing portion 72 are equivalent to those of the first reinforcing portion 71. In other words, the second reinforcing portion 72 is disposed on the free end side of the blade 6, that is on the end edge 61 side located on the inner side in the mold radial direction. This effectively reinforces the end edge 61 side, i.e., the tip portion, of the blade 6, that is on the inner side in the mold radial direction.

In particular, stress tends to concentrate in the second connection portion 56, which is the connection portion between the blade 6 and the second groove forming convex portion 5. In the mold 1A according to the first modification of the present invention, the second reinforcing portion 72 formed locally on the second connection portion 56 side relieves the concentration of stress in the second connection portion 56, thereby, deformation of the blade 6 is suppressed.

Further, since the second reinforcing portion 72 is formed locally, the decrease in the rigidity of the tread portion is limited, the anti-wear performance is improved, and the rolling resistance is reduced.

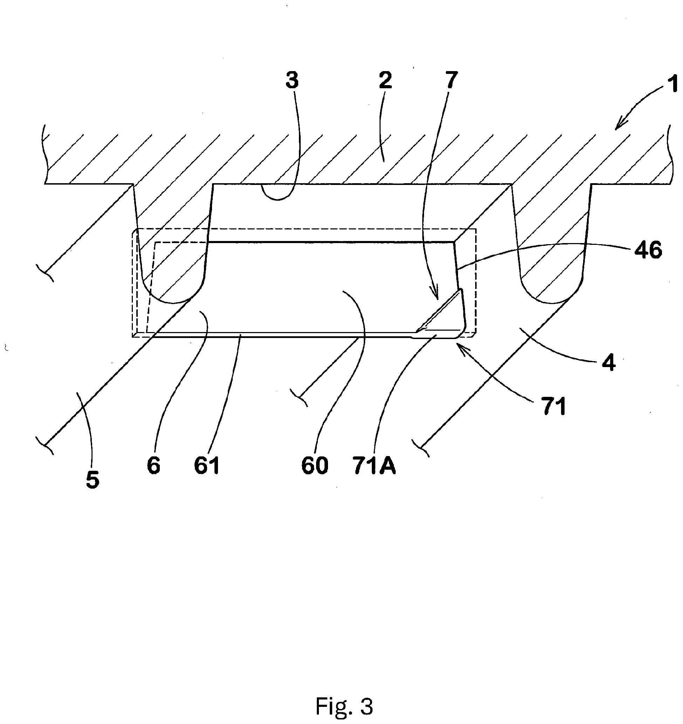

FIG. 3 shows a mold 1B according to the second modification including modification of the first reinforcing portion. For the parts of a first reinforcing portion 71B shown in FIG. 3 that are not described below, the configuration of the first reinforcing portion 71 shown in FIG. 1 described above can be adopted.

As shown in FIG. 3, it is preferred that the first reinforcing portion 71B includes a first portion 711B extending outward in the mold radial direction from the end edge 61 of the blade 6 to the first connection portion 46. The first portion 711B configured as such firmly connects the blade 6 and the first groove forming convex portion 4, therefore, deformation of the blade 6 is further suppressed. Furthermore, the first portion may have a triangular shape when viewed in the thickness direction of the main body portion 60 of the blade 6. The triangular shape may include an intersection point of the first groove forming convex portion 4 and the end edge 61 of the blade 6, a side extending from the intersection point along the first groove forming convex portion 4, and a side extending from the intersection point along the end edge 61 of the blade 6.

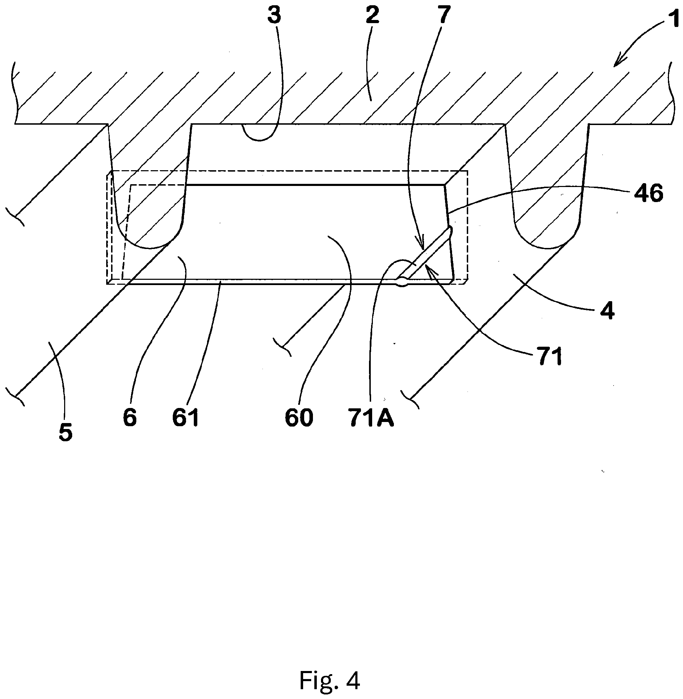

FIG. 4 shows a mold 1C according to the third modification including another modification of the first reinforcing portion. For parts of the first reinforcing portion 71C in FIG. 4 that are not described below, the configurations of the first reinforcing portion 71 shown in FIG. 1 and the first reinforcing portion 71B shown in FIG. 3 described above may be adopted.

As shown in FIG. 4, the first reinforcing portion 71C includes a first portion 711C extending outward in the mold radial direction from the end edge 61 of the blade 6 to the first connection portion 46. Further, it is preferred that the first portion 711C has a rib shape. In other words, it is preferred that the shape of the first portion 711C protruding from the main body portion 60 is part of a cylinder. The first portion 711C configured as such further suppresses deformation of the blade 6. Furthermore, the first portion 711C extends linearly and obliquely with respect to the mold radial direction. The first portion 711C in the third modification is inclined to the first groove forming convex portion 4 as it goes radially outward.

The configuration corresponding to the first portions 711B and 711C can also be applied to the second reinforcing portion 72 of the mold 1A shown in FIG. 2. Thereby, the blade 6 and the second groove forming convex portion 5 are firmly connected, therefore, deformation of the blade 6 is further suppressed.

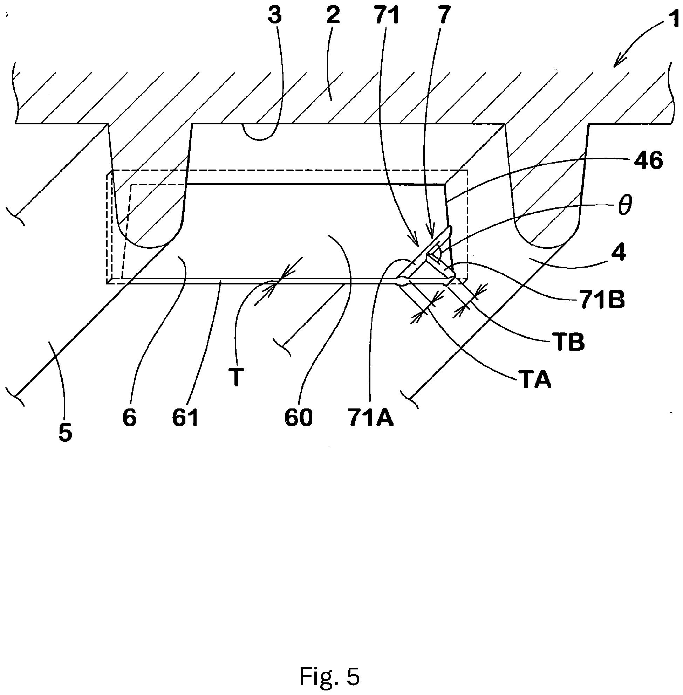

FIG. 5 shows a mold 1D according to the fourth modification including modification of the first reinforcing portion 71. For parts of a first reinforcing portion 71D in FIG. 5 that are not described below, the configuration of the first reinforcing portion in FIGs. 1, 3, and 4 described above can be adopted.

As shown in FIG. 5, it is preferred that the first reinforcing portion 71D includes the first portion 711C shown in FIG. 4 and a second portion 712 extending inward in the mold radial direction from the first portion 711C. The second portion 712 further suppresses deformation of the blade 6.

The second portion 712 intersects with the first portion 711C. The first portion 711C and the second portion 712 configured as such form a T-shaped first reinforcing portion 71D. As a result, the first portion 711C and the second portion 712 function synergistically, and thus enhance the reinforcing effect of the first reinforcing portion 71D. Further, it is preferred that the second portion 712 has a rib shape. The second portion 712 configured as such further suppresses deformation of the blade 6.

Furthermore, it is preferred that the inner end in the mold radial direction of the second portion 712 reaches the first connection portion 46 between the first groove forming convex portion 4 and the end edge 61 of the blade 6. The inner end in the mold radial direction of the second portion 712 may be connected with the intersection point between the first groove forming convex portion 4 and the end edge 61 of the blade 6. The second portion 712 configured as such further suppresses deformation of the blade 6. In addition, by combining a two-dimensional or three-dimensional blade, the first portion 711C, and the second portion 712, the strength of the blade 6 is further dramatically improved.

The configuration corresponding to the second portion 712 can also be applied to the second reinforcing portion 72 of the mold 1A shown in FIG. 2. Therefore, the blade 6 and the second groove forming convex portion 5 are firmly connected, thereby, deformation of the blade 6 is further suppressed.

It is preferred that the first portion 711C protrudes on both sides in the thickness direction of the main body portion 60 of the blade 6. Similarly, it is preferred that the second portion 712 protrudes on both sides in the thickness direction of the main body portion 60 of the blade 6. The first portion 711C and the second portion 712 configured as such suppress deformation of the blade 6 even when blade 6 is subjected to force in any direction in the mold circumferential direction.

It is preferred that a thickness TA of the first portion 711C is 2 to 3 times the thickness (T) of the main body portion 60. Similarly, it is preferred that a thickness TB of the second portion 712 is 2 to 3 times the thickness (T) of the main body portion 60. Since each of the thickness TA and the thickness TB is no less than twice the thickness (T), deformation of the blade 6 is further suppressed. Since each of the thickness TA and the thickness TB is no more than three times the thickness (T), decrease in the rigidity of the tread portion is suppressed, the anti-wear performance is improved, and the rolling resistance is reduced.

It is preferred that an angle θ at which the first portion 711C and the second portion 712 intersect is in the range from 80 to 100 degrees. Since the angle θ is in the range from 80 to 100 degrees, the first portion 711C and the second portion 712 function without bias, and the deformation of the blade 6 is further suppressed.

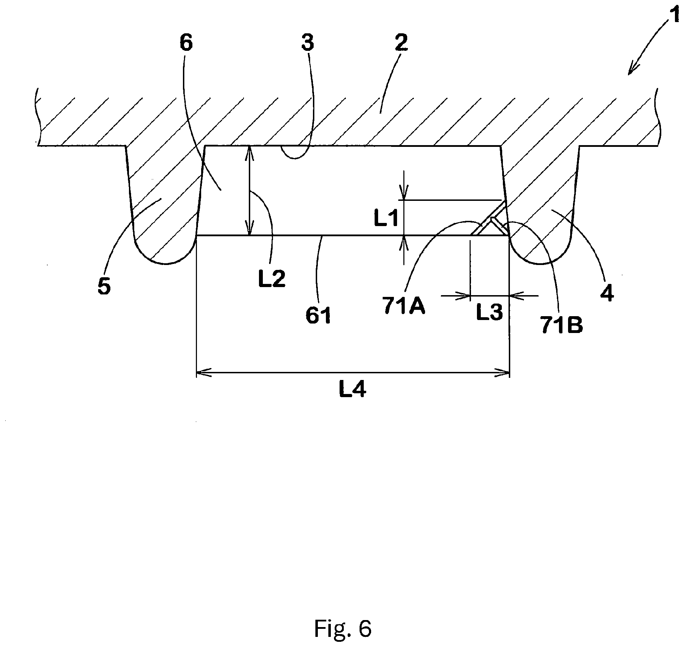

FIG. 6 shows a preferred form of the mold 1D of FIG. 5. As shown in FIG. 6, it is preferred that a length L1 in the mold radial direction of the first portion 711C is in the range from 20% to 50% of a length L2 in the mold radial direction from the ground contacting surface molding portion 3 to the end edge 61 of the blade 6.

Since the length L1 of the first portion 711C is 20% or more of the length L2 of the blade 6, the deformation of the blade 6 is easily suppressed. Since the length L1 of the first portion 711C is 50% or less of the length L2 of the blade 6, decrease in the rigidity of the tread portion is suppressed, the anti-wear performance is improved, and the rolling resistance is reduced.

It is preferred that a length L3 of the first portion 711C in the mold axial direction is in the range from 7% to 12% of a length L4 in the mold axial direction of the end edge 61 of the blade 6.

Since the length L3 of the first portion 711C is 7% or more of the length L4 of the blade 6, the deformation of the blade 6 is easily suppressed. Since the length L3 of the first portion 711C is 12% or less of the length L4 of the blade 6, the decrease in the rigidity of the tread portion is suppressed, the anti-wear performance is improved, and the rolling resistance is reduced.

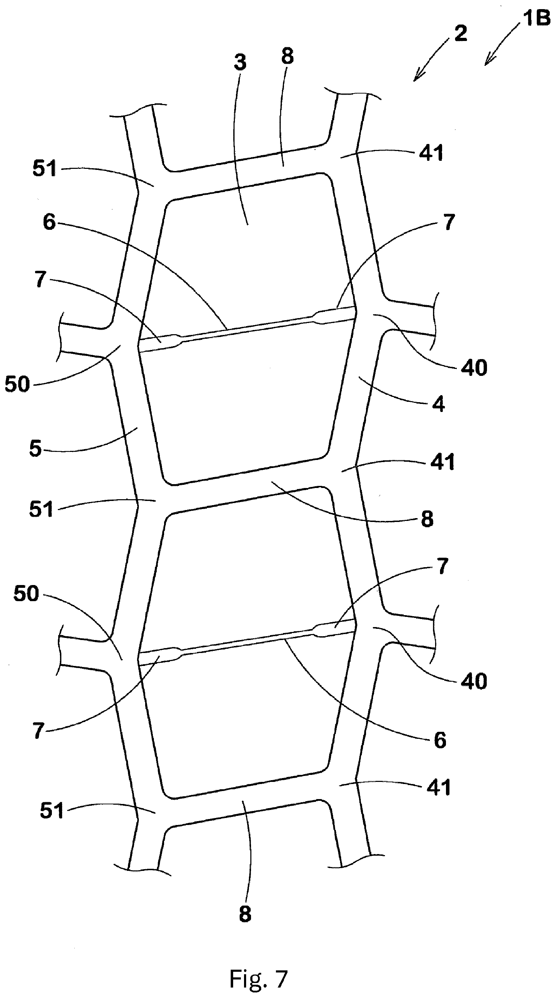

FIG. 7 shows a mold 1E, which is a modification of the mold 1 in FIG. 1 and the mold 1A in FIG. 2. For parts of the mold 1E in FIG. 7 that are not described below, the above-described configurations shown in FIGs. 1 to 6 may be adopted.

In the mold 1E in FIG. 7, the first groove forming convex portion 4 and the second groove forming convex portion 5 extend in a zigzag manner in the mold circumferential direction. At least one of the blades 6, each of the blades 6 in the present modification, has one end connected to one of apexes 40 of the zigzag of the first groove forming convex portion 4, and the other end connected to one of apexes 50 of the zigzag of the second groove forming convex portion 5. The apexes 40 protrude to one side in the mold axial direction, and the apexes 50 protrudes to the other side in the mold axial direction.

In the blade 6 connected to the apexes 40 and 50 of the zigzags of the first groove forming convex portion 4 and the second groove forming convex portion 5, stress tends to concentrate at the end edge 61 (see FIG. 1, etc.) in the vicinity of the first connection portion 46 and the second connection portion 56. In the mold 1E of the present modification, each of the blades 6 has the first reinforcing portion 71 formed at the connection portion 46 and the second reinforcing portion 72 formed at the connection portion 56, therefore, the deformation of the blades 6 is effectively suppressed.

The mold 1E has at least two axial groove forming convex portions 8 each connecting the first groove forming convex portion 4 and the second groove forming convex portion 5. The axial groove forming convex portions 8 are formed by protruding from the ground contacting surface molding portion 3.

Each of the axial groove forming convex portions 8 is connected to one of apexes 41 of the zigzag of the first groove forming convex portion 4 and one of apexes 51 of the zigzag of the second groove forming convex portion 5. The apexes 41 and the apexes 40 are arranged alternately one by one in the mold circumferential direction, and the apexes 51 and the apexes 50 are arranged alternately one by one in the mold circumferential direction. The apexes 41 protrude to the same other side as the apexes 50, and the apexes 51 protrude to the same one side as the apexes 40.

The first groove forming convex portion 4, the second groove forming convex portion 5, and the two axial groove forming convex portions 8 form a cavity space for forming a hexagonal block.

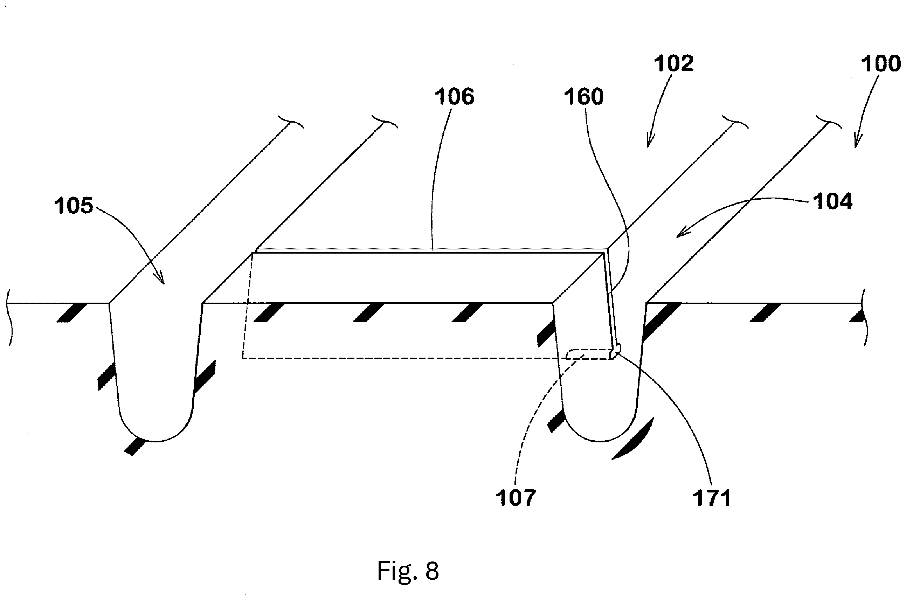

FIG. 8 shows a tire 100 vulcanized and molded by using the mold 1 shown in FIG. 1

The tire 100 has a tread portion 102. The tread portion 102 has a first groove 104, a second groove 105, and sipes 106 formed therein. It should be noted that only one of the sipes 106 is shown in FIG. 8. The first groove 104 is formed by the first groove forming convex portion 4. The second groove 105 is formed by the second groove forming convex portion 5. The sipes 106 are formed by the blades 6.

The first groove 104 and the second groove 105 are arranged adjacent to each other and facing each other, in other words, arranged side by side. Each of the sipes 106 communicates with the first groove 104 and the second groove 105.

At least one sipe 106 may be provided between the first groove 104 and the second groove 105. In a configuration in which the first groove 104 and the second groove 105 extend in the tire circumferential direction, it is preferred that a plurality of the sipes 106 is arranged at appropriate intervals in the tire circumferential direction. Hereinafter, unless otherwise noted, the following description will focus on one sipe 106, but it is preferred that each described feature is applied to a plurality of the sipes 106.

The sipe 106 has a main body portion 160 having a width of 0.2 mm or less, and a widened portion 107 having a width greater than 0.2 mm. The main body portion 160 is formed by the main body portion 60 of the blade 6. The widened portion 107 is formed by the reinforcing portion 7 of the blade 6.

The widths of the main body portion 160 and the widened portion 107 are measured on a tire in the standard state. Here, the "standard state" refers to a state in which the tire is mounted on a standard rim, inflated to a standard inner pressure, and loaded with no tire load. Hereafter, unless otherwise noted, dimensions and the like of various parts of the tire are the values measured in the standard state.

The "standard rim" refers to a wheel rim specified for the concerned tire by a standard included in a standardization system on which the tire is based, for example, the "normal wheel rim" in JATMA, "Design Rim" in TRA, and "Measuring Rim" in ETRTO.

The term "standard inner pressure" refers to air pressure specified for the concerned tire by a standard included in a standardization system on which the tire is based, for example, the maximum air pressure in JATMA, the maximum value listed in the "TIRE LOAD LIMITS AT VARIOUS COLD INFLATION PRESSURES" table in TRA, and "INFLATION PRESSURE" in ETRTO. When the tire is for a passenger car, the standard inner pressure is 180 kPa, for example.

The main body portion 160 accounts for the majority of the sipe 106. Since the width of the main body portion 60 is 0.2 mm or less, decrease in the rigidity of the tread portion 102 is suppressed, the anti-wear performance is improved, and the rolling resistance is reduced. On the other hand, since the width of the widened portion 107 is greater than 0.2 mm, deformation of the blade 6 for forming the sipe 106 is suppressed.

The widened portion 107 has a first widened portion 171. The first widened portion 171 is disposed on the first groove 104 side. The first widened portion 171 is formed by the first reinforcing portion 71 of the blade 6.

The first widened portion 171 is disposed on the groove bottom side of the sipe 106, in other words, the first widened portion 171 is disposed on the radially inner end edge (sipe end edge) side of the sipe 106. Therefore, decrease in the rubber volume of the tread portion 102 is suppressed, thereby, the anti-wear performance is improved. Further, the wet performance at the end of the wear life is improved.

In addition, since the first widened portion 171 is formed locally on the side of the connection portion (sipe connection portion) between the sipe 106 and the first groove 104, the decrease in the rigidity of the tread portion is limited, the anti-wear performance is improved, and the rolling resistance is reduced.

The sipe 106 may have a second widened portion formed by the second reinforcing portion 72 shown in FIG. 2. Further, the sipe 106 may have the first widened portion formed by the first portion 711B shown in FIG. 3, or the first portion 711C shown in FIG. 4, or the first portion 711C and the second portion 712 shown in FIG. 5.

While detailed description has been made of the mold 1 and the tire 100 according to the present invention, the present invention can be embodied in various forms without being limited to the illustrated embodiments and modifications.

### [ Description of Reference Signs ]

- 1, 1A, 1B, 1C, 1D, 1E: mold
- 2: tread ring
- 3: ground contacting surface molding portion
- 4: first groove forming convex portion
- 5: second groove forming convex portion
- 6: blade
- 7: reinforcing portion
- 40,41: apex
- 46: first connection portion
- 56: second connection portion
- 60: main body portion
- 61: end edge (radially inner end edge)
- 71, 71B, 71C, 71D: first reinforcing portion
- 711, 711B, 711C: first portion
- 712: second portion
- 72: second reinforcing portion
- 100: tire
- 102: tread portion
- 104: first groove
- 105: second groove
- 106: sipe
- 107: widened portion
- 160: main body portion
- 171: first widened portion
- T, T1, TA, TB: thickness

## Claims

1. A mold for vulcanization molding a tire including a tread ring for forming a tread portion, wherein
the tread ring comprises:
a ground contacting surface molding portion for forming a ground contacting surface of the tread portion;
a first groove forming convex portion and a second groove forming convex portion protruding from the ground contacting surface molding portion so as to form two grooves adjacent to each other in the tread portion; and
one or more blades each having one end connected with the first groove forming convex portion and the other end connected with the second groove forming convex portion so as to form a sipe communicating with the two grooves in the tread portion,
wherein the blade or each blade includes a main body portion having a thickness of 0.2 mm or less, a reinforcing portion having a thickness greater than 0.2 mm, a radially inner end edge, and a first connection portion between the blade or each blade and the first groove forming convex portion, and
the reinforcing portion includes a first reinforcing portion formed locally on the radially inner end edge side and the first connection portion side.

2. The mold according to claim 1, wherein
the blade or each blade includes a second connection portion connecting with the second groove forming convex portion, and
the reinforcing portion includes a second reinforcing portion formed locally on the radially inner end edge side and the second connection portion side.

3. The mold according to claim 1, wherein the first reinforcing portion includes a first portion extending outward in the mold radial direction from the radially inner end edge of the blade or each blade to the first connection portion.

4. The mold according to claim 3, wherein the first reinforcing portion includes a second portion extending inward in the mold radial direction from the first portion so as to intersect with the first portion.

5. The mold according to claim 4, wherein the second portion has an inner end in the mold radial direction reaching a connection between the first groove forming convex portion and the radially inner end edge of the blade or each blade.

6. The mold according to claim 4 or 5, wherein the first portion and the second portion have a rib shape.

7. The mold according to any one of claims 4 to 6, wherein the first portion and the second portion protrude on both sides in the thickness direction of the main body portion of the blade or each blade.

8. The mold according to any one of claims 4 to 7, wherein a thickness of each of the first portion and the second portion is 2 to 3 times the thickness of the main body portion.

9. The mold according to any one of claims 1 to 8, wherein
the first groove forming convex portion and the second groove forming convex portion extend in a zigzag manner in the mold circumferential direction, and
both ends of the blade or each blade are connected with apexes of the zigzags of the first groove forming convex portion and the second groove forming convex portion.

10. A tire comprising a tread portion, wherein
the tread portion is provided with a first groove, a second groove, and a sipe communicating with the first groove and the second groove,
the sipe has a main body portion having a width of 0.2 mm or less, and a widened portion having a width greater than 0.2 mm,
the sipe has a radially inner sipe end edge, and a sipe connection portion connecting with the first groove, and
the widened portion has a first widened portion formed locally on the radially inner sipe end edge side and the sipe connection portion side.
